# EUROPEAN PATENT SPECIFICATION

(11) **EP 1 699 855 B1**
(45) Date of publication and mention of the grant of the patent: **31.10.2007**
(21) Application number: 04803795.6
(22) Date of filing: 10.12.2004
(51) Int. Cl.: C08J 9/06, C08J 9/10

(54) **PROCESS FOR PRODUCING A NANO-POROUS POLYMERIC MATERIAL, A POLYMER COMPOSITION COMPRISING NANOPARTICLES OF A CHEMICAL BLOWING AGENT, NANOPARTICLES OF A CHEMICAL BLOWING AGENT AND A NANO-POROUS POLYMERIC MATERIAL**
VERFAHREN ZUR HERSTELLUNG EINES NANOPORÖSEN POLYMERMATERIALS, POLYMER-ZUSAMMENSETZUNG, DIE NANOTEILCHEN EINES CHEMISCHEN TREIBMITTELS ENTHÄLT, NANOTEILCHEN EINES CHEMISCHEN TREIBMITTELS UND NANO-PORÖSES POLYMERMATERIAL
PROCEDE POUR PRODUIRE UN MATERIAU POLYMERIQUE NANO-POREUX, UNE COMPOSITION POLYMERIQUE COMPRENANT DES NANOPARTICULES D'UN AGENT DE GONFLAGE CHIMIQUE, NANOPARTICULES D'UN AGENT DE GONFLAGE CHIMIQUE ET UN MATERIAU NANOPOREUX POLYMERIQUE

(30) Priority: 12.12.2003 EP 03078882
(43) Date of publication of application: 13.09.2006
(73) Proprietor: DSM IP Assets B.V., 6411 TE Heerlen (NL)
(72) Inventor: JAHROMI, Shahab, NL-6211 PA Maastricht (NL)
(74) Representative: Renkema, Jaap
(86) International application number: PCT/EP2004/014162
(87) International publication number: WO 2005/059015

(56) References cited:
- EP-A- 0 274 827
- EP-A- 0 591 766
- GB-A- 1 052 803

## Description

The invention relates to a process for producing a nano-porous polymeric material.

Many processes for producing a nano-porous polymeric material are known. For example from US 2002130396-A1 a process is known, wherein a nitrogeneous polymer, acting as a decomposable porogen, and a specific thermosetting polymer are mixed and heated to cure the thermosetting polymer. In this way a two-phase structure is obtained, comprising a continuous phase of the thermosetting polymer and a dispersed phase of the nitrogeneous polymer. Upon heating to about 450 °C the nitrogeneous polymer decomposes and forms pores in the thermosetting polymer.

One disadvantages of the known process is that it is very difficult to obtain the proper two-phase structure as the nucleation and subsequent phase separation of the porogen is difficult to control. Therefore the desired pore dimensions are often not obtained. A further disadvantage is that the pores only are formed at very high temperatures. Because of the high decomposition temperature of the porogen this process is not suitable for most polymeric materials, as these polymeric materials decompose at the same temperature or even at lower temperatures.

From US-6342454 B a process is known wherein a decomposable porogen, a polymer and a coupling agent are mixed and heated to couple the porogen to the polymer. Again via nucleation and phase separation of the porogen a two phase structure is obtained. After heating upon high temperatures the porogen decomposes and pores are formed. Disadvantages of the known process are that it is complicated to couple the porogen to the polymer, that it is again difficult to obtain the desired two phase structure and that again very high temperatures are necessary to decompose the porogen.

From CA-2314016 A1 a process is known, wherein a multi-layered polymeric material is formed, the material comprising discontinuous, gas-containing gaps between adjacent layers. Thin layers of the polymeric material are partly welded together, the polymeric material is than contacted with a physical blowing agent, so that the blowing agent is dissolved in the polymer to a certain extend. The so obtained polymer/blowing agent combination is than brought at a certain temperature and pressure, so that the blowing agent is released to form the gas-containing gaps between the adjacent, partly welded layers. The process is very complicated and the process is only suitable to form a layered structure.

From WO01/65617 a process is known, wherein a fumed-silica pore former is incorporated in a polymeric layer, where after the pore former is removed chemically, by dissolving the pore former in a strong alkali metal hydroxide, so that pores are obtained. The process is very complicated and only suitable for thin layers and for high stability fluorinated polymers that are not affected by the alkali metal hydroxide.

The known processes suffer in that they are complicated, are only suitable for materials having very high decomposition temperatures, are only suitable to produce very thin layers of nano-porous polymeric structure etc.

The invention aims to provide a process for producing a nano-porous polymeric material at moderate temperatures, so that a wide variety of polymeric materials can be used.

Surprisingly this aim is achieved by a process comprising the steps
a. incorporating a chemical blowing agent in the form of nano-particles in the polymeric material,
b. decomposing the chemical blowing agent in its gaseous reaction products.

By the process according to the invention a nano-porous polymeric material is formed, at the reaction temperature of the chemical blowing agent, which is moderate, so that no decomposition of the polymer takes place. In this way it is possible to produce new nano-porous polymeric materials, using polymers that could not be used before. Further a polymeric material having a well-defined nano-porous structure is obtained. This is because no complicated phase separation step is required for ultimately obtaining the porous structure, but the porous structure is simply predetermined by the size and shape of the nanoparticles of the chemical blowing agent.

A further advantage is that it is not only possible to use the process for producing thin layers of the polymeric material, but also to produce layers or even shaped articles having higher thicknesses.

In principle every thermoplastic or thermosetting polymeric material or any elastomeric polymeric material may be used in the process according to the invention, provided that a chemical blowing agent suited for the polymeric material is used.

Examples of thermoplastic polymeric materials that may be used include the polyolefins, for examples polyethylene, polypropylene or copolymers comprising ethylene or propylene, styrenic polymers, poly-acrylates, for example polymethylmethacrylate, polyvinylchloride and plastisized polyvinylchloride, polyamides, polyesters, polyarylenes, such as are polyphenylenes, poly(phenylquinoxalines) and poly(arylene ethers), polybenzocyclobutene etc.

Examples of thermosetting polymeric materials that may be used include epoxy resin, unsaturated polyester resins, saturated polyesters such as acid functional polyester, hydroxy functional polyester, acylate resins, such as hydroxy functional acrylate resin and glycidyl acrylate resin. The crosslinkers that are suitable for use in the thermoset coating composition are for example phenolic crosslinkers, imidazoline crosslinkers, anhydride adducts, modified dicyandiamine, epoxy resin, glycidyl crosslinker, for example TGIC (triglycidyl isocyanurate), hydroxylalkyl amide, isocyanate adducts, dodecanedicarboxylic acid, but also polyimides, silicon-containing polymers, such as organosilicates. Very good results are obtained if a UV-curable resin composition is used, preferably bisphenol A ethoxylate diacrylate.

Examples of suitable organosilicates are silsesquioxanes, alkoxy silanes, organic silicates, orthosilicates and organically modified silicates. Suitable silsesquioxanes are for example, hydrogen silsesquioxanes, alkyl silsesquioxanes, preferably lower alkyl silsesquioxanes, aryl or alkyl/aryl silsequioxanes, such as phenyl silsesquioxanes, and copolymers of silsesquioxanes with for example polyimides.

Examples of elastomeric polymeric materials that may be used include natural rubber (NR), neoprene rubber, styrene butadiene rubber (SBR), chlorosulphonated polyethene (CSM), acrylate rubbers (ACM), chlorinated polyethene (CM), nitrilbutadiene rubber (H-NBR), hydrogenated nitrilbutadiene rubber (H-NBR), silicone rubber (QM), fluororubber (FKM), polyethene vinylacetate (EVA), elastomers obtained by the polymerization of ethene and an alpha olefin (for instance EPM) and elastomers obtained by the polymerisation of ethers, an alpha olefin and a nonconjugated polyene (for instance EPDM).

The process according to the invention is also very suitable to be used for the production of nano-porous biodegradable polymeric materials. Biodegradable polymers are polymers that are degradable by hydrolytic and enzymatic degradation for example polyesters like polylactones and polylactic acids, and polyamides, polyhydroxyalkonates, poly(dioxanone), poly(trimethylene carbonate) copolymers, and poly(-caprolactone) homopolymers and copolymers, cellulose acetate butyrate, pol-hydroxybutyrate and poly-hydroxybutyrate-co-valerate.

Chemical blowing agents are additives which are able to evolve gas through well-defined chemical reactions and produce foam structures in polymeric materials. This is opposite to porogens, which donot decompose through well-defined chemical reactions, but that, at very high temperatures, fall randomly apart in all kinds of molecular fragments.

Furthermore the porogens that decompose thermally are normally dissolved in a solution also comprising the polymeric material. A two phase structure op the porogen and the thermoplastic polymeric material is obtained by nucleation and subsequent precipitation of the porogen from the solution. This is opposite to the chemical blowing agent, that is incorporated into the polymeric material as nanoparticles, available as such.

Compared to a porogen a chemical blowing agent decomposes at moderate temperatures, for example below 300 °C, preferably below 280 °C, more preferably below 240 °C, still more preferably below 200 °C. The decomposition temperature of the chemical blowing agent is the temperature at which a peak occurs in a DSC plot as measured in a Perkin Elmer-7 apparatus at a temperature increase of 10 °C/minute for a 5 mg sample.

A chemical blowing agent preferably decomposes in a gas mixture comprising not more than 5 different gas molecules. The gas mixture may comprise nitrogen, carbon dioxide, carbon monoxide and ammonia. Preferably the gas mixture comprises nitrogen or carbon dioxide.

The skilled person knows how to select a suitable blowing agent for a certain polymeric material. Blowing agents and criterions for their selection are for example disclosed in Plastics Additives Handbook, 3rd edition, Hanser Publishers, New York, Chap. 16 (1990).

Examples of suitable chemical blowing agents include azodicarbonamide, hydrazine derivatives like for example 4,4'-oxybis(benzenesulfohydrazide), diphenylsulfone-3, 3'-disulfohydrazide en trihydrazinotriazine, semicarbides like for example p-toluylenesulfonyl semicarbide , tetrazoles like for example 5-phenyltetrazole, benzoxazines like for example isatoic anhydride, but also citric acid and potassium bicarbonate. Preferably azodicarbonamide is used as the chemical blowing agent, as it is both suitable for the production of nanoparticles and it acts very well as a blowing agent to form well-defined micro-poruous structures in a variety of polymeric materials.

Suitable processes for producing nanoparticles of the chemical blowing agents include processes based controlled precipitation of the blowing agent from a solvent, as for example reviewed in J. Jung, M. Perrut, "Particle design using supercritical fluids: Literature and patent survey"J. of Supercritical Fluids, 20 (2001), p. 179 etc.

Good results are obtained by the precipitation process wherein an anti-solvent is used. This process is based on mixing a solution of the chemical blowing agent in a solvent with an anti-solvent. During the mixing the chemical blowing agent precipitates as nanoparticles. The anti-solvent must be miscible with the solvent, but must not be a solvent for the chemical blowing agent. Preferably a compressed gas is used as the antisolvent, because the compressed gas can be rapidly mixed with the solution resulting in a high nucleation and fine particles. Preferably carbondioxide is used as the antisolvent.

Another process is the so-called RESS process (Rapid Expansion of a Supercritical Solution), wherein a compressed gas is used as a solvent for the chemical blowing agent. When the solution is expanded the solvent power drops quickly and the chemical blowing agent precipitates as nanoparticles.

The nanoparticles of the chemical blowing agent may have average diameter of 2 - 1000 nanometer (nm), preferably of 4 - 500 nm. The average diameter is measured from a SEM photo by measuring the diameter of 100 randomly selected particles. When the particles are not spherical the largest diameter is chosen.

In most cases the nanoparticles of the chemical blowing agent will be incorporated into the polymeric material by mixing the nanoparticles and the polymeric material at a temperature below the decomposition temperature of the chemical blowing agent. In case of a liquid resin it is even possible to mix at room temperature. It is also possible to dissolve the polymeric material in a solution already comprising the nanoparticles or to dissolve the polymeric material and to add the nanoparticles to the solution. This is advantageous in case the melting temperature of the polymeric material is above the decomposition temperature of the chemical blowing agent.

Suitable methods for the mixing are for example sonification or an ultrasonic bath.

It is however also possible to mix the nanoparticles of the chemical blowing agent in a thermoplastic polymeric material by melting the polymeric material and mixing the nanoparticles into the melt and further processing the mixture into a foam in a conventional process for producing polymeric foams by using a chemical blowing agent, for example extrusion and injection moulding.

In most cases this will be carried out by increasing the temperature of the polymer melt comprising the nanoparticles of the chemical blowing agent, while maintaining a high pressure, so that decomposition of the blowing agent takes place, to cool the melt and decrease the pressure, so that the still molten product expands into a foam, further cooling down and solidifying the foam. In this way a polymeric foam having very fine cells is obtained. Applications are similar to the foams known hitherto and are for example in the area of isolation material for low density foams and as a construction material.

In a preferred embodiment the process according to the invention comprises the steps of:
a) incorporating the chemical blowing agent in the polymeric material
b) shaping the so obtained polymeric material, for example into a shaped article or into a coating,
c) at least partly polymerising the polymeric material, steps a, b and c carried out at a temperature below the decomposition temperature of the chemical blowing agent,
d) heating the at least partly polymerised polymeric material to a temperature above the decomposition temperature of the chemical blowing agent.

In this way it is very well possible to obtain a nano-porous structure, having a very fine pore or cell structure, the pores or the cells having about the shape and size of the nanoparticles. This is especially true if the chemical blowing agent is decomposed below the glass transition temperature of the polymeric material.

Such a process may for example be carried out for producing cross-linked polyethylene foams. In such a process the polyethylene is cross-linked first and the chemical blowing agent is decomposed after that. In such a way a foam of very fine foam cells is obtained, the cells having a diameter slightly larger than the diameter of the nanoparticles of the chemical blowing agent. It is also possible to use the process for applying a coating of a thermosetting material, curing the coating at least partly and after that decomposing the chemical blowing agent. In such a way in general a porous structure is obtained, the pores having about the size of the nanoparticles.

The processing of the polymeric material may by carried out by one of the conventional processes, for example moulding, casting, spin coating etc.

Preferably in step b) the polymeric material is processed into a coating.

Preferably the polymeric material is cured by using a UV-curing system. This enables curing at a moderate temperature, well below the decomposition temperature of the chemical blowing agent.

In one even further preferred embodiment the nanoparticles of the chemical blowing agent are used in a low concentration, for example below 15 volume %, preferably below 10 volumer %, as separate cavities are formed.

In another even further preferred embodiment a higher concentration of the nanoparticles of the chemical blowing agent is used, for example 15 - 60 volume %, as in that case the nanoparticles come into contact and cavities are connected, to form pores running through the material. This is for example desirable if nano-porous polymeric material is used as a membrane.

Typical applications include for example anti-reflective coatings, for example applied on monitor screens, a bio-degradable scaffold for tissue engineering, an isolation coating, a dielectric interlayer, a membrane, for example a membrane for use as a separation layer in fuel cells or for the seperation of organic or bio-organic materials, a nano-reactor.

The invention also relates to nanoparticles of a chemical blowing agent of a chemical blowing agent as used in the process according to the invention.

The invention also relates to a nano-porous polymeric material comprising a polymer having a melting temperature and/or a decomposition temperature below 450 °C. The decomposition temperature is the temperature at which in a TGA experiment in which a sample of 5 mg was heated with 10 °C/minute has lost 10% of its weight. Surprisingly it is possible to produce nano-porous polymeric materials with the process of the present invention, while with the known processes such polymeric materials could not be used, due to the severe conditions of the process. Preferably the melting temperature and/or a decomposition temperature is below 400 °C, still more preferably below 350 °C

### Example 1

In 100ml of dimethylsulfoxide (DMSO) 0.5 grams of the chemical blowing agent azodicarbonamide was dissolved. The solution was processed using the PCA process as described in WO 03/086606, by using carbondioxide as the anti-solvent. After filtration of the precipitate 0.1 grams of azodicarbonamide nanaoparticles were obtained, having an average diameter of 100nm as measured with SEM (average of 100 particles, randomly selected, largest diameter of particles was taken). The particles were mixed into bisphenol A ethoxylate diacrylate ,a liquid UV curable resin, by sonification during 30 minutes, using a Sonicar^{™} W385 ultrasonic processor, after which a stable dispersion of the nanoparticles in the resin composition was obtained. After adding 0,5 wt% of a photoinitiator, Irgacure^{™} 184, delivered by Ciba, the dispersion was spin-coated at 3000 rpm onto glass slides.

Thereafter photocuring of the so-obtained coating was carried out at 100 °C for 3 minutes using a Macam^{™} flexicure lamp, delivered by Livingstone in Schotland. After that the coating was heated at 200 °C, for 2 hours under air atmosphere in a Mettler^{™} FP82HT Hot Stage oven.

During the heating at 200 °C the coating turned from transparent into milky, showing that the nano-porous structure was obtained. The thickness of the coating was hardly or not influenced by the decomposition of the blowing agnet. SEM photographs of the nano-porous polymeric composition showed the presence of fine pores, having about the size of the original nanoparticles.

## Claims

1. Process for producing a nano-porous polymeric material, **characterized in that** the process comprises the steps of:
a. incorporating a chemical blowing agent in the form of nano-particles in the polymeric material,
b. decomposing the chemical blowing agent in its gaseous reaction products.

2. Process according to claim 1, comprising the steps of:
a. incorporating the chemical blowing agent in the polymeric material
b. processing the so obtained polymeric material,
c. at least partly polymerising the polymeric material, steps a, b and c are carried out at a temperature below the decomposition temperature of the chemical blowing agent,
d. heating the at least partly polymerised polymeric material to a temperature above the decomposition temperature of the chemical blowing agent.

3. Process according to claim 2, **characterized in that** the composition is shaped in step b) into a coating.

4. Process according to claim 1 or 3, **characterized in that** the chemical blowing agent has a decomposition temperature below 300 °C.

5. Process according to any one of claims 1-4, **characterized in that** azodicarbonamide is used as the chemical blowing agent.

6. Process according to any one of claims 2 - 5, **characterized in that** the polymeric material is cured by a UV-curing system.

7. Process according to any one of claims 1-6, **characterized in that** a biodegradable polymer is used.

8. Polymer composition comprising nanoparticles of a chemical blowing agent as used in the process according to any one of claims 1-7.

9. Nanoparticles of a chemical blowing agent as used in the process according to any one of claims 1-7.

10. Nano-porous polymeric material comprising a polymer having a melting temperature and/or a decomposition temperature below 450°C.

11. Use of the process according to anyone of claims 1-7 for the production of anti-reflective coatings, a bio-degradable scaffold for tissue engineering, an isolation coating, a dielectric interlayer, a membrane, a nano-reactor.

## Patentansprüche

1. Verfahren zur Herstellung eines nanoporösen polymeren Materials, **dadurch gekennzeichnet, daß** man:
a. ein chemisches Treibmittel in Form von Nanopartikeln in das polymere Material einarbeitet,
b. das chemische Treibmittel zu seinen gasförmigen Reaktionsprodukten zersetzt.

2. Verfahren nach Anspruch 1, bei dem man:
a. das chemische Treibmittel in Form von Nanopartikeln in das polymere Material einarbeitet,
b. das so erhaltene polymere Material verarbeitet,
c. das polymere Material zumindest teilweise polymerisiert, wobei man die Schritte a, b und c bei einer Temperatur unterhalb der Zersetzungstemperatur des chemischen Treibmittels durchführt,
d. das zumindest teilweise polymerisierte polymere Material auf eine Temperatur oberhalb der Zersetzungstemperatur des chemischen Treibmittels erhitzt.

3. Verfahren nach Anspruch 2, **dadurch gekennzeichnet, daß** man die Zusammensetzung in Schritt b) zu einer Beschichtung formt.

4. Verfahren nach Anspruch 1 oder 3, **dadurch gekennzeichnet, daß** das chemische Treibmittel eine Zersetzungstemperatur unter 300°C aufweist.

5. Verfahren nach einem der Ansprüche 1-4, **dadurch gekennzeichnet, daß** man als chemisches Treibmittel Azodicarbonamid verwendet.

6. Verfahren nach einem der Ansprüche 2-5, **dadurch gekennzeichnet, daß** man das polymere Material mit Hilfe eines UV-Härtungssystems härtet.

7. Verfahren nach einem der Ansprüche 1-6, **dadurch gekennzeichnet, daß** man ein biologisch abbaubares Polymer verwendet.

8. Polymerzusammensetzung, enthaltend Nanopartikel eines chemischen Treibmittels, wie bei dem Verfahren nach einem der Ansprüche 1-7 verwendet.

9. Nanopartikel eines chemischen Treibmittels, wie bei dem Verfahren nach einem der Ansprüche 1-7 verwendet.

10. Nanoporöses polymeres Material, umfassend ein Polymer mit einer Schmelztemperatur und/oder Zersetzungstemperatur unter 450°C.

11. Verwendung des Verfahrens nach einem der Ansprüche 1-7 zur Herstellung von Antireflexionsbeschichtungen, einem biologisch abbaubaren Gerüst für das Tissue Engineering, einer Isolationsbeschichtung, einer dielektrische Zwischenschicht, einer Membran, einem Nanoreaktor.

## Revendications

1. Procédé de fabrication d'un matériau polymère nanoporeux, **caractérisé en ce qu'**il comprend les étapes consistant à :
a. incorporer un agent gonflant chimique sous la forme de nanoparticules dans le matériau polymère,
b. décomposer l'agent gonflant chimique en ses produits de réaction gazeux.

2. Procédé selon la revendication 1, comprenant les étapes consistant à :
a. incorporer l'agent gonflant chimique dans le matériau polymère,
b. traiter le matériau polymère ainsi obtenu,
c. polymériser au moins partiellement le matériau polymère, les étapes a, b et c étant réalisées à une température inférieure à la température de décomposition de l'agent gonflant chimique,
d. chauffer le matériau polymère polymérisé au moins partiellement à une température supérieure à la température de décomposition de l'agent gonflant chimique.

3. Procédé selon la revendication 2, **caractérisé en ce que** la composition est mise en forme dans l'étape b) en un revêtement.

4. Procédé selon la revendication 1 ou 3, **caractérisé en ce que** l'agent gonflant chimique présente une température de décomposition inférieure à 300 °C.

5. Procédé selon l'une quelconque des revendications 1 à 4, **caractérisé en ce que** de l'azodicarbonamide est utilisé en tant qu'agent gonflant chimique.

6. Procédé selon l'une quelconque des revendications 2 à 5, **caractérisé en ce que** le matériau polymère est durci par un système de durcissement par UV.

7. Procédé selon l'une quelconque des revendications 1 à 6, **caractérisé en ce qu'**un polymère biodégradable est utilisé.

8. Composition de polymère comprenant des nanoparticules d'un agent gonflant chimique, tel qu'utilisé dans le procédé selon l'une quelconque des revendications 1 à 7.

9. Nanoparticules d'un agent gonflant chimique, tel qu'utilisé dans le procédé selon l'une quelconque des revendications 1 à 7.

10. Matériau polymère nanoporeux comprenant un polymère présentant une température de fusion et/ou une température de décomposition inférieure à 450 °C.

11. Utilisation du procédé selon l'une quelconque des revendications 1 à 7 pour la production de revêtements antireflet, un échafaud biodégradable pour l'ingénierie de tissus, un revêtement isolant, une couche intermédiaire diélectrique, une membrane, un nano-réacteur.
